# EUROPEAN PATENT APPLICATION

(11) **EP 4 618 332 A1**
(43) Date of publication of application: **17.09.2025**
(21) Application number: 23887571.0
(22) Date of filing: 17.08.2023
(51) Int. Cl.: H02B 13/00, H02B 1/20

(54) **INTEGRATED SWITCHGEAR**

(30) Priority: 08.11.2022 CN 202211390073
(71) Applicant: Xi'an XD Switchear Electric Co., Ltd, Xi'an Shaanxi 710077 (CN); China XD Electric Co., Ltd, Xi'an, Shaanxi 710075 (CN)
(72) Inventor: ZHU, Kai, Xi'an, Shaanxi 710077 (CN); LUAN, Riwei, Xi'an, Shaanxi 710077 (CN); MA, Zhanfeng, Xi'an, Shaanxi 710077 (CN); HE, Jia, Xi'an, Shaanxi 710077 (CN); CHANG, Zhiguo, Xi'an, Shaanxi 710077 (CN); ZHANG, Hengli, Xi'an, Shaanxi 710077 (CN); ZHANG, Zhenfeng, Xi'an, Shaanxi 710077 (CN); LI, Xin, Xi'an, Shaanxi 710077 (CN); TONG, Rundong, Xi'an, Shaanxi 710077 (CN); LIANG, Rui, Xi'an, Shaanxi 710077 (CN)
(74) Representative: Lavoix
(86) International application number: PCT/CN2023/113478
(87) International publication number: WO 2024/098876

(57) **Abstract**

Disclosed in the present invention is an integrated switchgear, comprising a device housing, a three-phase circuit breaker, and three-phase switch assemblies. At least two three-phase switch assemblies are comprised; the three-phase switch assemblies are electrically connected to the three-phase circuit breaker; the three-phase circuit breaker and the three-phase switch assemblies are located in an inner cavity of the device housing; the three-phase switch assemblies each comprise a three-phase movable side conductor; and the projections of the three-phase movable side conductors overlap in the arrangement direction of the three-phase movable side conductors. In the integrated switchgear provided by the present application, the three-phase circuit breaker and the three-phase switch assemblies are integrated in the device housing, and the projections of the three-phase movable side conductors overlap and the projections of three-phase stationary side conductors overlap in the arrangement direction of the three-phase movable side conductors, so that the movable side conductors and the stationary side conductors of the three-phase switch assemblies, and a movable side conductor and a stationary side conductor of the circuit breaker can be shared without considering the shape and the mounting order, thereby improving the manufacturing efficiency (the number of molds is reduced in casting, and the number of tool replacements is reduced in machining) and the assembly efficiency of parts of the integrated switchgear, and reducing the production cost.

## Description

The present application claims the priority to Chinese Patent Application No.202211390073.7, titled "INTEGRATED SWITCHGEAR", filed on November 08, 2022 with the China National Intellectual Property Administration, which is incorporated herein by reference in its entirety.

### FIELD

The present disclosure relates to the technical field of electrical devices, and in particular to an integrated switchgear.

### BACKGROUND

In an offshore apparatus powered by wind, a wind turbine tower has a small inner space, which requires a compact structure, a small footprint, and a light weight of a switchgear.

Components in a conventional switchgear are connected to each other through insulating partition plates. Components of a three-phase circuit breaker, an isolating switch, a grounding switch and a high-speed grounding switch are individually arranged in respective housings, and are connected to each other through ventilated or non-ventilated insulating partition plates.

In the integrated switchgear, moving-side conductors of three phases of a three-phase switch assembly are different in structures. During assembling each moving-side conductor, the moving-side conductor is identified first, and then is installed in a predetermined position. If the moving-side conductor is installed in an erroneous position, the moving-side conductor is disassembled and reinstalled, resulting in low assembly efficiency of the integrated switchgear.

Hence, how to improve the assembly efficiency of the integrated switchgear is a problem to be addressed urgently by those skilled in the art.

### SUMMARY

The present disclosure is to provide an integrated switchgear, to improve the assembly efficiency of the integrated switchgear.

In order to achieve the above objective, an integrated switchgear is provided in the present disclosure. The integrated switchgear includes a housing, a three-phase circuit breaker and a three-phase switch assembly. A quantity of the three-phase switch assembly is at least two, the three-phase switch assembly is electrically connected to the three-phase circuit breaker, and the three-phase circuit breaker and the three-phase switch assembly are both arranged in an inner cavity of the housing; the three-phase switch assembly includes moving-side conductors of three phases and static-side conductors of the three phases; and in an arrangement direction of the moving-side conductors of the three phases, projections of the moving-side conductors of the three phases are overlapped with each other, projections of the static-side conductors of the three phases are overlapped with each other, and projections of conductors of the three-phase circuit breaker are overlapped with each other.

In an embodiment, in the integrated switchgear, the housing includes a main cylinder, a branch cylinder and a casing detachably connected to the branch cylinder. A side of the casing away from the branch cylinder is covered by a cover plate, the main cylinder is in communication with the branch cylinder, and the three-phase circuit breaker is arranged in the main cylinder; and the three-phase switch assembly is connected to the casing and is arranged in an inner space formed by the branch cylinder and the casing, and the three-phase switch assembly is in a one-to-one correspondence with the casing.

In an embodiment, in the integrated switchgear, a side wall of the main cylinder and a side wall of the branch cylinder each are arc-shaped, and an axis of the main cylinder is perpendicular to an axis of the branch cylinder.

In an embodiment, in the integrated switchgear, the three-phase switch assembly includes an isolating switch and a high-speed grounding switch; or, the three-phase switch assembly is an isolating grounding switch, and the isolating grounding switch includes an isolating switch and a grounding switch.

In an embodiment, in the integrated switchgear, the isolating switch includes three static-side conductors and three static-side conductors; the moving-side conductors of the isolating switch refer to the moving-side conductors corresponding to the static-side conductors and the moving-side conductors of the isolating switch in a one-to-one correspondence with the static-side conductors of the isolating switch; the three static-side conductors of the isolating switch are arranged on static-side conductors of a three-phase arc-extinguishing chamber of the three-phase circuit breaker, respectively, moving-side conductors of the three-phase arc-extinguishing chamber are arranged in a straight line; a distance between axes of ends of the two adjacent static-side conductors of the isolating switch connected to the moving-side conductors of the isolating switch is less than a distance between axes of the two adjacent static-side conductors of the three-phase arc-extinguishing chamber; and
the isolating grounding switch includes three isolating static-side conductors; the moving-side conductors of the isolating grounding switch refers to moving-side conductors of the isolating grounding switch in a one-to-one correspondence with the isolating static-side conductors of the isolating grounding switch; the three isolating static-side conductors of the isolating grounding switch are arranged on the moving-side conductors of the three-phase arc-extinguishing chamber of the three-phase circuit breaker, respectively; the moving-side conductors of the three-phase arc-extinguishing chamber are arranged in a straight line; a distance between axes of ends of the two adjacent isolating static-side conductors of the isolating grounding switch connected to the moving-side conductors of the isolating grounding switch is less than a distance between axes of the two adjacent moving-side conductors of the three-phase arc-extinguishing chamber.

In an embodiment, in the integrated switchgear, the moving-side conductors of the isolating grounding switch and the moving-side conductors of the isolating switch are conductors of a same type that are arranged in a mirror-symmetry manner.

In an embodiment, in the integrated switchgear, free ends of the static-side conductors of the isolating switch extend towards a direction close to the moving-side conductors of the arc-extinguishing chamber; the moving-side conductors of the isolating switch are connected to an insulator, and fixed on a metal protrusion or non-metal protrusion inside the branch cylinder by the insulator, and the moving-side conductors of the isolating grounding switch are connected to an insulator and fixed on a metal protrusion or non-metal protrusion inside the branch cylinder by the insulator.

In an embodiment, the integrated switchgear further includes an operating mechanism for the high-speed grounding switch, where the housing includes the main cylinder, the branch cylinder and the casing detachably connected to the branch cylinder, the side of the casing away from the branch cylinder is covered by the cover plate, the main cylinder is in communication with the branch cylinder, and the three-phase circuit breaker is arranged in the main cylinder; the three-phase switch assembly is connected to the casing and is arranged in the inner space formed by the branch cylinder and the casing, and three-phase switch assembly is in a one-to-one correspondence with the casing; and the high-speed grounding switch, the casing, the cover plate and the operating mechanism for the high-speed grounding switch are integrated to form a detachable module.

In an embodiment, in the integrated switchgear, a quantity of the three-phase switch assembly is two, three or four, and at least one of the three-phase switching assemblies is an isolating grounding switch. The quantity of the three-phase switch assembly is two, and the two three-phase switch assemblies are arranged on a same side of a plane formed by axes of the three-phase circuit breaker; the quantity of the three-phase switch assembly is three, two of the three-phase switch assemblies are arranged on a same side of a plane formed by axes of the three-phase circuit breaker, and the other three-phase switch assembly is arranged on another side of the plane formed by the axes of the three-phase circuit breaker; or, the quantity of the three-phase switch assembly is four, two of the three-phase switch assemblies are arranged on a same side of a plane formed by axes of the three-phase circuit breaker, and the other two three-phase switch assemblies are arranged on another side of the plane formed by the axes of the three-phase circuit breaker, where static-side conductors of one of the three-phase switch assemblies are shared with the other three-phase switch assembly on the same side.

In an embodiment, the integrated switch device further includes a wiring sleeve, a cable container and a grounding block, where grounding static-sides of the isolating grounding switch, the wiring sleeve and the cable container are integrated on the cover plate; the cover plate is detachably connected to the casing; a side of the cover plate outside the casing is provided with the grounding block; the grounding static sides are connected to each other by a rigid conductor and are connected to the grounding block; the grounding block and the rigid conductor are arranged outside the cable container; and the grounding block is connected to the cover plate.

In the above technical solution, the integrated switchgear according to the present disclosure includes the housing, the three-phase circuit breaker and the three-phase switch assembly. The quantity of the three-phase switch assembly is at least two, the three-phase switch assembly is electrically connected to the three-phase circuit breaker, and the three-phase circuit breaker and the three-phase switch assembly are both arranged in the housing. The three-phase switch assembly includes the moving-side conductors of three phases and the static-side conductor of the three phases. In an arrangement direction of the moving-side conductors of the three phases, projections of the moving-side conductors of the three phases are overlapped with each other, projections of the static-side conductors of the three phases are overlapped with each other, and projections of conductors of the three-phase circuit breaker are overlapped with each other.

From the above description, it can be seen that in the integrated switchgear according to the present disclosure, the three-phase circuit breaker and the three-phase switch assembly are integrated in the housing. In the arrangement direction of the moving-side conductors of the three phases, the projections of the moving-side conductors of the three phases are overlapped with each other, and the projections of the static-side conductors of the three phases are overlapped with each other, so that the moving-side conductors, the static-side conductors of the three-phase switch assembly, the moving-side conductors and the static-side conductors of the circuit breaker can be interchangeable in different phases without considering shapes and installation sequences, thereby improving the manufacturing efficiency and assembly efficiency of parts of the integrated switchgear (reduces the number of molds for casting parts and reduces the number of tool changes for machining parts), and reducing the production cost.

### BRIEF DESCRIPTION OF THE DRAWINGS

Hereinafter drawings to be applied in embodiments of the present disclosure or in the conventional technology are briefly described, in order to illustrate technical solutions according to embodiments of the present disclosure or in the conventional technology more clearly. Apparently, the drawings in the following descriptions are only some embodiments of the present disclosure, and other drawings may be obtained by those skilled in the art based on the provided drawings without any creative effort.
FIG. 1 is a three-dimensional structural view of a first integrated switchgear according to an embodiment of the present disclosure;
FIG. 2 is a three-dimensional structural view of the integrated switchgear shown in FIG. 1 from another perspective;
FIG. 3 is an appearance view of the integrated switchgear shown in FIG. 1;
FIG. 4 is a schematic structural diagram of a second integrated switchgear according to an embodiment of the present disclosure;
FIG. 5 is a schematic structural diagram of a third integrated switchgear according to an embodiment of the present disclosure;
FIG. 6 is a diagram illustrating a mounting position of a rigid conductor according to an embodiment of the present disclosure;
FIG. 7 is a diagram illustrating an installation position of a grounding block according to an embodiment of the present disclosure;
FIG. 8 is a diagram illustrating an installation position of a protrusion according to an embodiment of the present disclosure; and
FIG. 9 is a partial layout diagram of a three-phase circuit breaker and a three-phase switch assembly according to an embodiment of the present disclosure.

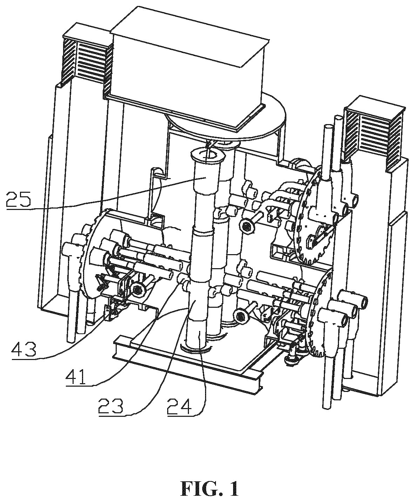

Reference numerals in FIG. 1 to FIG. 9 are listed as follows.
A1 three-phase switch assembly, A2 three-phase switch assembly, A3 three-phase switch assembly, A4 three-phase switch assembly;
11 main cylinder, 12 second branch cylinder, 13 third branch cylinder, 14 first branch cylinder, 15 first casing, 16 second casing, 17 second cover plate, 171 grounding block, 172 rigid conductor, 18 first cover plate, 19 protrusion;
21 moving-side conductor of arc-extinguishing chamber, 22 vacuum arc-extinguishing chamber, 23 static-side conductor of arc-extinguishing chamber, 24 static-side insulating support of arc-extinguishing chamber, 25 moving-side insulating support of arc-extinguishing chamber;
31 isolating static-side conductor of isolating grounding switch; 32 moving-side conductor of isolating grounding switch, 33 output shaft of isolating grounding switch, 34 insulating support of isolating grounding switch, 35 grounding static side;
41 static-side conductor of isolating switch, 42 moving-side conductor of isolating switch, 43 output shaft of isolating switch, 44 insulating support of isolating switch, 41' static-side conductor of isolating switch, 42' moving-side conductor of isolating switch, 43' output shaft of isolating switch, 44' insulating support of isolating switch;
51 moving-side conductor of high-speed grounding switch, 52 insulating support of high-speed grounding switch, 53 output shaft of high-speed grounding switch, 51' moving-side conductor of high-speed grounding switch, 52' insulating support of high-speed grounding switch, 53'output shaft of high-speed grounding switch;
61 main circuit conductor, 62 wiring sleeve, 63 outgoing line, 61' main circuit conductor, 62' wiring sleeve, 63' outgoing line, 61" main circuit conductor, 62" wiring sleeve, 63" outgoing line, 64 cable container;
71 operating mechanism for three-phase circuit breaker, 72 operating mechanism for isolating grounding switch, 73 operating mechanism for high-speed grounding switch, 74 operating mechanism for isolating switch.

### DETAILED DESCRIPTION

The present disclosure is to provide an integrated switchgear, to improve the assembly efficiency of the integrated switchgear.

The present disclosure is further described in detail in conjunction with drawings and embodiments to enable those skilled in the art to better understand technical solutions of the present disclosure.

Reference is made to FIGS. 1 to 9.

In an embodiment, the integrated switchgear according to the embodiment of the present disclosure includes a housing, a three-phase circuit breaker, and a three-phase switch assembly. A quantity of the three-phase switch assembly may be two, three, or four. At least one of the three-phase switch assemblies is an isolating grounding switch.

In a case that the quantity of the three-phase switch assembly is two, the two three-phase switch assemblies are arranged on a same side of a plane formed by axes of the three-phase circuit breaker.

In a case that the quantity of the three-phase switch assembly is three, two of the three-phase switch assemblies are arranged on a same side of a plane formed by axes of the three-phase circuit breaker, and the other three-phase switch assembly is arranged on another side of the plane formed by the axes of the three-phase circuit breaker.

In a case that the quantity of the three-phase switch assembly is four, two of the three-phase switch assemblies are arranged on a same side of a plane formed by axes of the three-phase circuit breaker, and the other two three-phase switch assemblies are arranged on another side of the plane formed by the axes of the three-phase circuit breaker, where static-side conductors of one of the switch assemblies are shared by the two switch assemblies on the same side.

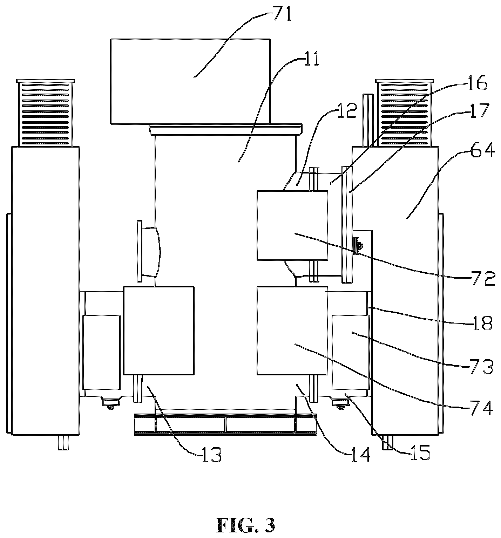

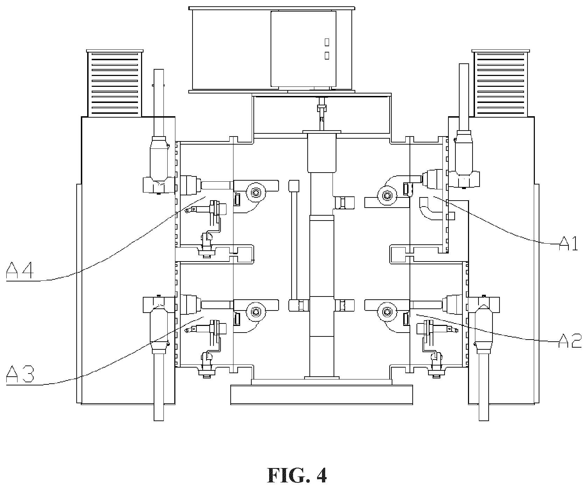

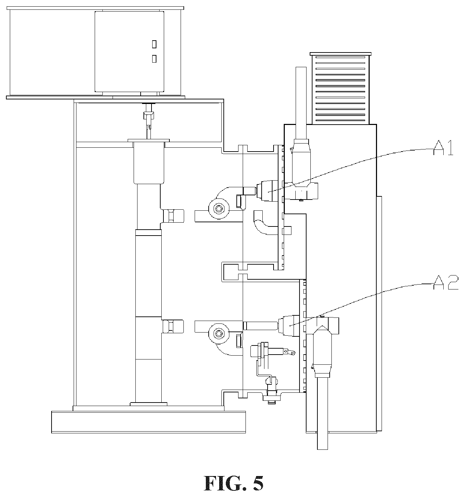

At least one of the multiple three-phase switching assemblies is an isolating grounding switch assembly. As shown in FIG. 5, the quantity of the three-phase switch assembly is two, namely, a three-phase switch assembly A1 and a three-phase switch assembly A2. As shown in FIG. 3, the quantity of the three-phase switch assembly is three, namely, a three-phase switch assembly A1, a three-phase switch assembly A2, and a three-phase switch assembly A3. As shown in FIG. 4, the quantity of the three-phase switch assembly is four, namely, a three-phase switch assembly A1, a three-phase switch assembly A2, a three-phase switch assembly A3, and a three-phase switch assembly A4.

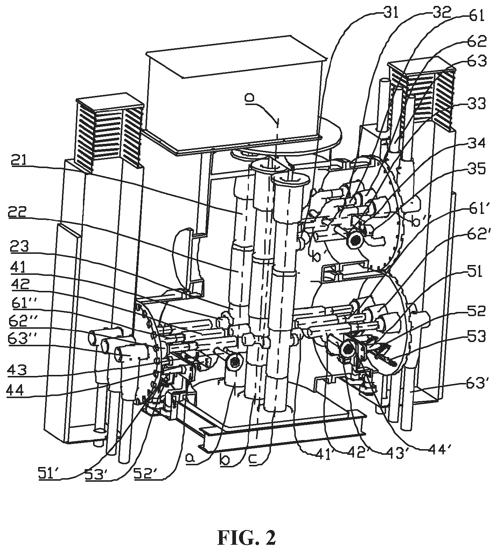

As shown in FIGS. 1 and 2, the three-phase circuit breaker includes a vacuum arc-extinguishing chamber 22, a moving-side insulating support 25 of the arc-extinguishing chamber, a static-side insulating support 24 of the arc-extinguishing chamber, and a moving-side conductor 21 of the arc-extinguishing chamber and a static-side conductor 23 of the arc-extinguishing chamber arranged on opposite sides of the vacuum arc-extinguishing chamber 22. The moving-side conductor 21 of the arc-extinguishing chamber is supported by the moving-side insulating support 25 of the arc-extinguishing chamber, and the static-side conductor 23 of the arc-extinguishing chamber is supported by the static-side insulating support 24 of the arc-extinguishing chamber. The moving-side conductor 21 of the arc-extinguishing chamber is connected to the moving-side insulating support 25 of the arc-extinguishing chamber in a one-to-one correspondence. The static-side conductor 23 of the arc-extinguishing chamber is connected to the static-side insulating support 24 of the arc-extinguishing chamber in a one-to-one correspondence. The three-phase circuit breaker is connected to an operating mechanism 71 for the three-phase circuit breaker. The integrated switchgear further includes main circuit conductors 61, 61', 61", wiring sleeves 62, 62', 62", outgoing lines 63, 63', 63" and a cable container 64. In an embodiment, a quantity of the cable container 64 is two, and the two cable containers are arranged on opposite sides of the housing, respectively.

The three-phase switch assembly is electrically connected to the three-phase circuit breaker, and the three-phase circuit breaker and the three-phase switch assembly are both arranged in the housing. The three-phase switch assembly includes moving-side conductors of the three phases. Projections of the moving-side conductors of the three phases are overlapped with each other in an arrangement direction of the moving-side conductors of the three phases.

It can be seen that from the above descriptions that in the integrated switchgear according to the embodiment of the present disclosure, the three-phase circuit breaker and the three-phase switch assembly are integrated in the housing, and the projections of the moving-side conductors of the three phases are overlapped with each other in the arrangement direction of the moving-side conductors of the three phases, so that the moving-side conductors of the three-phase switch assembly can be interchangeable without considering the shapes and installation sequence of the three moving-side conductors, thereby improving the assembly efficiency of the integrated switchgear.

In an embodiment, the housing includes a main cylinder 11, a branch cylinder and a casing detachably connected to the branch cylinder. A side of the casing away from the branch cylinder is covered by a cover plate. The three-phase circuit breaker is arranged in the main cylinder 11. The three-phase switch assembly is connected to the casing and is arranged in an inner space formed by the branch cylinder and the casing. The three-phase switch assembly is in a one-to-one correspondence with the casing. The main cylinder 11 is in communication with the branch cylinder.

The integrated switchgear further includes an operating mechanism 73 for a high-speed grounding switch. A high-speed grounding switch, the casing, the cover plate and the operating mechanism 73 for the high-speed grounding switch are integrated to form a detachable module.

In order to facilitate processing, in an embodiment, a side wall of the main cylinder 11 and a side wall of the branch cylinder each are arc-shaped, and an axis of the main cylinder 11 is perpendicular to an axis of the branch cylinder. The vacuum arc-extinguishing chamber 22 is fixed in the main cylinder 11. A plane formed by axes of the three-phase vacuum arc-extinguishing chamber 22 passes through or has a distance from the axis of the main cylinder 11.

During processing, the branch cylinder may be detachably connected to the main cylinder 11, for example, by a threaded fastener. A sealing ring is sandwiched between the branch cylinder and the main cylinder 11 for sealing. Alternatively, the branch cylinder is connected to the main cylinder 11 in a non-detachable manner, for example, the branch cylinder and the main cylinder 11 are formed as a whole by welding or casting.

In an embodiment, a quantity of the branch cylinder is three, namely, a first branch cylinder 14, a second branch cylinder 12, and a third branch cylinder 13. In an embodiment, the branch cylinder and the main cylinder 11 are integrally formed, or the branch cylinder is welded to the main cylinder 11. A quantity of the cover plate is three, namely, a first cover plate 18, a second cover plate 17, and a third cover plate. A quantity of the casing is three, namely, a first casing 15, a second casing 16, and a third casing. The first casing 15 is arranged on the first branch cylinder 14, and an end of the first casing 15 is covered by the first cover plate 18. The second casing 16 is arranged on the second branch cylinder 12, and an end of the second casing 16 is covered by the second cover plate 17. The third casing is arranged on the third branch cylinder 13, and an end of the third casing is covered by the third cover plate.

In the three-phase circuit breaker, a plane formed by an axis a, an axis b, and an axis c of the vacuum arc-extinguishing chamber 22 of the three-phase circuit breaker passes through or has a distance from the centerline O of the main cylinder 11. That is, the three-phase vacuum arc-extinguishing chamber 22 may be arranged at a center of the main cylinder 11 or may be arranged eccentrically with respect to the center.

The three-phase switch assembly includes an isolating switch and a high-speed grounding switch.

In an embodiment, the three-phase switch assembly is an isolating grounding switch, and the isolating grounding switch includes an isolating switch and a grounding switch. In an embodiment, the isolating grounding switch is driven by an operating mechanism and has three types of conductors, i.e., a moving-side conductor (the isolating moving-side conductor and the grounding moving-side conductor are one part), an isolating static-side conductor and a grounding static-side conductor. Three operation conditions exist, that is, the isolating switch is opened and the grounding switch is closed, the isolating switch is closed and the grounding switch is opened, and the isolating switch is opened and the grounding switch is opened.

In an embodiment, the three-phase circuit breaker, the isolating switch, and the isolating grounding switch are arranged in a same space formed by the main cylinder 11 and the branch cylinder. Both an isolating fracture of the three-phase switch assembly and a fracture of the arc-extinguishing chamber are defined in one housing, so that various components are connected to each other without insulating partition plates.

As shown in FIGS. 1 and 2, the isolating switch includes static-side conductors 41, 41', moving-side conductors 42, 42', output shafts 43, 43', and insulating supports 44, 44'.

The isolating switch includes three static-side conductors 41, 41'. The moving-side conductors of the isolating switch refer to moving-side conductors 42, 42' of the isolating switch in a one-to-one correspondence with the static-side conductors 41, 41' of the isolating switch. The three static-side conductors 41, 41' of the isolating switch are arranged on static-side conductors 23 of a three-phase arc-extinguishing chamber of the three-phase circuit breaker, respectively. Moving-side conductors 21 of the three-phase arc-extinguishing chamber are arranged in a straight line. A distance between axes of ends of the two adjacent static-side conductors 41, 41' of the isolating switch connected to the moving-side conductors 42, 42' of the isolating switch is less than a distance between axes of the two adjacent static-side conductors 23 of the three-phase arc-extinguishing chamber.

The isolating grounding switch includes an isolating static-side conductor 31, a moving-side conductor, an output shaft 33, an insulating support 34 and a grounding static side 35.

In an embodiment, the isolating static-side conductor 31 of the isolating grounding switch is fixed on the moving-side conductor 21 of the arc-extinguishing chamber, and the static-side conductors 44, 41' of the isolating switch are fixed on the static-side conductors 23 of the arc-extinguishing chamber.

The isolating grounding switch includes three isolating static-side conductors 31. The moving-side conductors of the isolating grounding switch refer to moving-side conductors 32 of the isolating grounding switch in a one-to-one correspondence with the isolating static-side conductors 31 of the isolating grounding switch. The three isolating static-side conductors 31 of the isolating grounding switch are arranged on the moving-side conductors 21 of the three-phase arc-extinguishing chamber of the three-phase circuit breaker, respectively. The moving-side conductors 21 of the three-phase arc-extinguishing chamber are arranged in a straight line. A distance between axes of ends of the two adjacent isolating static-side conductors 31 of the isolating grounding switch connected to the moving-side conductors 32 of the isolating grounding switch is less than a distance between axes of the two adjacent moving-side conductors 21 of the three-phase arc-extinguishing chamber.

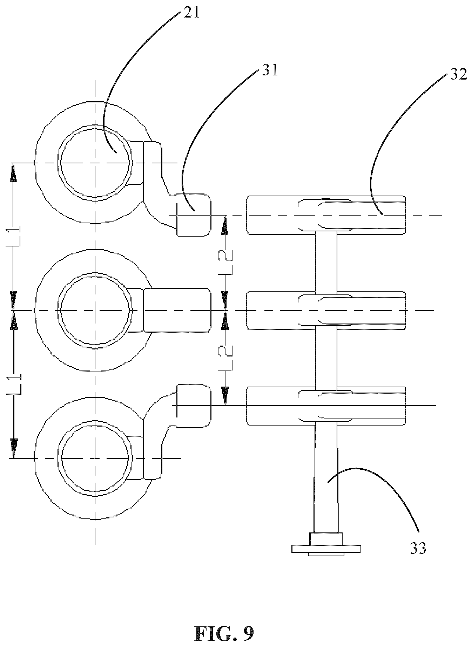

As shown in FIG. 9, the arc-extinguishing chamber an interphase distance L1, the isolating switch and the isolating grounding switch each have an interphase distance L2, where L2<L1, and a diameter of the branch cylinder is less than a diameter of the main cylinder 11. For the isolating static-side conductors 31 of the isolating grounding switch and the static-side conductors 44, 41' of the isolating switch, conductors at two sides bend toward the intermediate conductors. On the premise of meeting the insulation requirements, conductors at two sides of the isolating switch and conductors at two sides of the isolating grounding switch bend toward the intermediate conductors, so that the interphase distance of the isolating switch and the interphase distance of the isolating grounding switch each are less than the interphase distance of the arc-extinguishing chamber, and the diameter of the branch cylinder is less than the diameter of the main cylinder, thereby reducing the interphase distance of the isolating switch and the interphase distance of the isolating grounding switch, reducing the width, height and weight of the switch and reducing the processing difficulty.

The high-speed grounding switch includes moving-side conductors 51, 51', insulating supports 52, 52', and output shafts 53, 53'.

In a case that the quantity of the three-phase switch assembly is three, the three three-phase switch assemblies include one isolating switch and two isolating grounding switch assemblies. The two isolating grounding switch assemblies include the isolating grounding switch and the high-speed grounding switch.

As shown in FIG. 2, when the three-phase circuit breaker, the isolating grounding switch and the isolating switch are closed, current of a fan A enters from the outgoing line 63 at the isolating grounding switch, sequentially passes through the wiring sleeve 62, the main circuit conductor 61, the moving-side conductors 32 of the isolating grounding switch, the isolating static-side conductors 31 of the isolating grounding switch, the moving-side conductors 21 of the arc-extinguishing chamber, the vacuum arc-extinguishing chamber 22, the static-side conductors 23 of the arc-extinguishing chamber, the static-side conductors 41' of the isolating switch, the moving-side conductors 42' of the isolating switch, and finally flows out through the main circuit conductor 61' at the isolating switch, the wiring sleeve 62' and the outgoing line 63'. Current of another fan B enters from the outgoing line 63", sequentially passes through the wiring sleeve 62", the main circuit conductor 61", the moving-side conductors 42 of the isolating switch and the static-side conductors 41 of the isolating switch, merges with the current of the fan A at the static-side conductors 23 of the arc-extinguishing chamber, and flows out through the static-side conductors 41' of the isolating switch, the moving-side conductors 42' of the isolating switch, the wiring sleeve 62' and the outgoing line 63'.

The moving-side conductors 32 of the isolating grounding switch and the moving-side conductors 42, 42' of the isolating switch are conductors of a same type that are arranged in a mirror-symmetry manner, thereby improving the standardization and universality of the conductors. In an embodiment, the moving-side conductors 32 of the isolating grounding switch and the moving-side conductors 42, 42' of the isolating switch are in a same shape and arranged in the mirror-symmetry manner. Three terminals of the moving-side conductors 32 of the isolating grounding switch are connected to the isolating static-side conductors 31 of the isolating grounding switch, the grounding static side 35, and the main circuit conductor 61, respectively. Three terminals of the moving-side conductors 42, 42' of the isolating switch are connected to the main circuit conductors 61, 61', and are connected to or disconnected from the static-side conductors 41, 41' of the isolating switch and the moving-side conductors 51, 51' of the high-speed grounding switch through respective moving contacts.

The main components provided in the present disclosure which are the three-phase circuit breaker, the isolating switch, the isolating grounding switch, the high-speed grounding switch, the wiring sleeve, and the outgoing line each are arranged in a straight line to shorten the overall length.

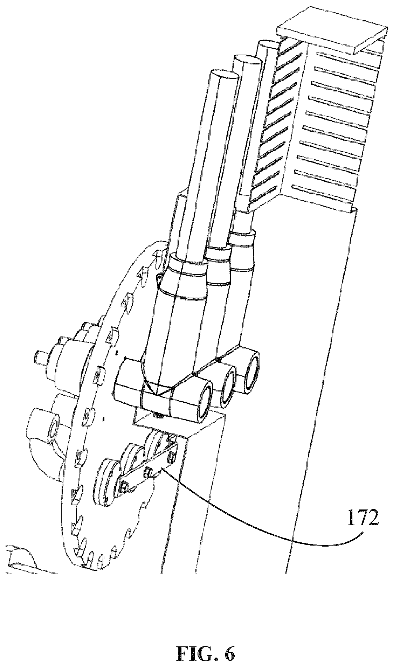

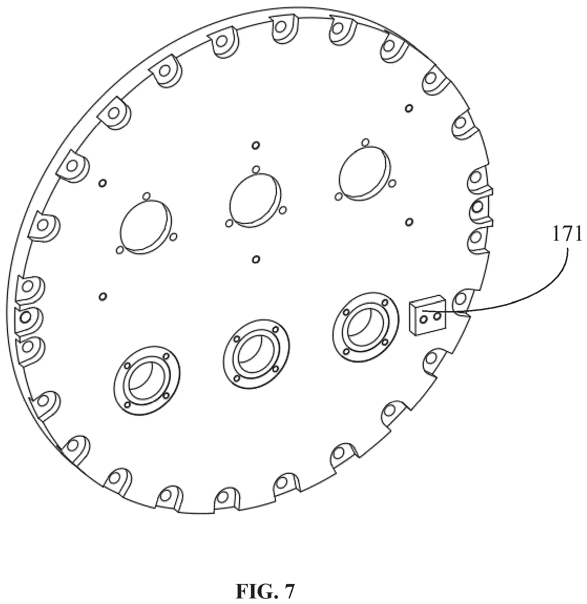

The grounding static sides 35 of the isolating grounding switch, the wiring sleeve 62 and the cable container 64 are integrated on a same cover plate 17. A grounding block 171 is provided on a side of the cover plate 17 outside the casing. The grounding static sides of three phases are connected to each other by a rigid conductor 172 and are connected to the grounding block 171. The grounding block 171 and the rigid conductor 172 are arranged outside the cable container 64. The cover plate 17 is connected to the casing 16 by bolts, and counterbored holes are defined at locations to which the bolts are connected, so that the cable container 64 can be attached to the cover plate 17. The structure is shown in FIGS. 6 and 7.

The high-speed grounding switch, the casing, the cover plate and the operating mechanism for the high-speed grounding switch are integrated to form a grounding detachable module. During the applications, the main circuit conductors 61' of three phases pass through the inside of the casing 15 where the high-speed grounding switch is arranged, and the axes of three phases are parallel to the axis of the casing 15. The detachable module of the high-speed grounding switch and the isolating switch may be replaced with the isolating grounding switch based on requirements of main connection. The high-speed grounding switch, the operating mechanism therefor and the casing form the detachable module, which may be disassembled or replaced with the isolating grounding switch according to the application scenario.

In an embodiment, as a part of the detachable module, the high-speed grounding switch may be flexibly arranged to realize two-circuit outgoing lines, three-circuit outgoing lines or four-circuit outgoing lines. There are different wiring manners, such as the isolating grounding switch is provided for the outgoing lines in each circuit, or the isolating grounding switch is provided for a part of outgoing lines and the isolating switch and the high-speed grounding switch are provided for a part of outgoing lines. During expanding the number of outgoing lines, the number of fractures is increased, and outgoing lines in each circuit correspond to a separate isolating fracture, thereby avoiding sharing one isolating fracture by outgoing lines in three or more circuits in the main electrical connection.

Free ends of the static-side conductors 41, 41' of the isolating switch extend towards a direction of the moving-side conductors 21 of the arc-extinguishing chamber. The moving-side conductors 42, 42' of the isolating switch are connected to an insulator and fixed on a metal protrusion 19 or a non-metal projections 19 inside the branch cylinder by the insulator. The moving-side conductors 32 of the isolating grounding switch are connected to by an insulator and fixed on a metal protrusion 19 or a non-metal projection 19 inside the branch cylinder by the insulator. The static-side conductors 41 extends towards the direction of the moving-side conductors 21 of the arc-extinguishing chamber, and are fixed on the metal protrusion or the non-metal protrusion inside the main cylinder by the insulating support, a detachable module formed by the branch cylinder, the isolating switch and the high-speed grounding switch is arranged, so that the switchgear with the three-circuit outgoing lines can be expanded into the switchgear with the three-circuit outgoing lines. The outgoing lines in each circuit correspond to a separate isolating fracture, thereby avoiding sharing one isolating fracture by outgoing lines in two circuits. That is, the static-side conductors 41 of the isolating switch are extended and are fixed to the casing by an insulator, the insulator is similar to the insulator used for the moving-side conductors of the isolating switch, and the three static-side conductors 41 are connected to each other by the insulator.

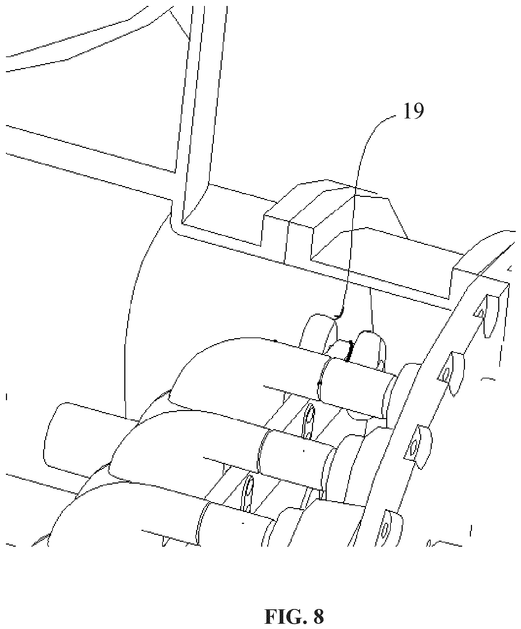

In an embodiment, as shown in FIG. 8, the moving-side conductors 32 of the isolating grounding switch is fixed on the metal non-metal protrusion 19 or non-metal protrusion 19 inside the cylindrical branch cylinder of the housing by the insulator. In an embodiment, the three moving-side conductors 32 of the isolating grounding switch are installed by one insulator. In an embodiment, the moving-side conductors 32 of the isolating grounding switch are sleeved on the insulator. The two protrusions 19 of the insulator for the moving-side conductors are welded or bolted to the branch cylinder, and are arranged in a mirror-symmetry manner with respect to a plane formed by a centerline b of an intermediate phase of the vacuum arc-extinguishing chamber 22 and a centerline b' of an intermediate phase of the moving-side conductors 32 of the isolating grounding switch.

The grounding static sides 35 of the isolating grounding switch, the wiring sleeve 62 and the cable container 64 are integrated on the cover plate. The cover plate is detachably connected to the casing. A side of the cover plate outside the casing is provided with the grounding block 171. The grounding static sides 35 are connected to each other by the rigid conductor 172 and are connected to the grounding block 171. The grounding block 171 and the rigid conductor 172 are arranged outside the cable container 64.

The centerline b' of the intermediate phase of the moving-side conductors 32 of the isolating grounding switch is parallel to and not coincident with the centerline b" of the branch cylinder. The output shaft 33 of the isolating grounding switch is arranged in the branch cylinder and is directly connected to the operating mechanism 72 for the isolating grounding switch fixed outside the branch cylinder. The operating mechanism 72 for the isolating grounding switch drives the inner conductor of the moving-side conductors 32 of the isolating grounding switch to move along the centerline thereof through the rotation of the output shaft 33 of the isolating grounding switch, realizing the switching of three operation conditions, that is, the isolating switch is closed and the grounding switch is opened, the isolating switch is opened and the grounding switch is opened, and the isolating switch is opened and the grounding switch is closed. The moving-side conductors 42, 42' of the isolating switch are also fixed to the two metal or non-metal protrusions inside the branch cylinder 13 by the insulator, in the same manner as the moving-side conductors 32 of the isolating grounding switch. The output shafts 43, 43' of the isolating switch are arranged in the branch cylinder 14 and are directly connected to the operating mechanism 74 for the isolating switch fixed outside of the branch cylinder 14. The operating mechanism 74 for the isolating switch drives the inner conductors of the moving-side conductors 42, 42' of the isolating switch to move along the centerline thereof through the rotation of the output shafts 43, 43' of the isolating switch, so as to realize the switching between the opening and closing of the isolating switch.

The structure mentioned above is a switchgear corresponding to the three-circuit outgoing lines accounting for the largest proportion in the wind turbine tower. Two isolating switches and the module of the high-speed grounding switch are arranged on both sides of the vacuum arc-extinguishing chamber 22, respectively. As shown in FIG. 4, for the switchgear with the four-circuit outgoing lines, another branch cylinder is arranged on the main cylinder 11 for accommodating the isolating switch and the module of the high-speed grounding switch (or the isolating grounding switch). The static-side conductors 41, 41' of the isolating switch are extended to the direction of the moving-side conductors 21 of the arc-extinguishing chamber and are fixed on the metal or non-metal protrusions 19 inside the main cylinder 11 by an insulator, thereby forming the switchgear with the four-circuit outgoing lines. As shown in FIG. 5, for the switchgear with the two-circuit outgoing lines, one high-speed grounding switch and one module of isolating switch (or isolating grounding switch) are removed, and the corresponding branch cylinder may be covered by the cover plate or removed.

In the integrated switchgear, the three-phase circuit breaker, the isolating switch, and the isolating grounding switch are integrated into the same housing, and the operating mechanism and the cable container are arranged outside the housing, so that the overall layout is compact and small in size, and is suitable for applications and maintenance inside the tower.

In the present disclosure, the isolating switch, the static sides of the isolating grounding switch are integrated to the static-side conductors and the moving-side conductors of the circuit breaker, so that various components are connected to each other without insulating partition plates, thus reducing the structural size and reducing the weight of the product.

The embodiments in the specification are described in a progressive manner, and each embodiment focuses on the difference from other embodiments. Same and similar parts in each embodiment may be referred to each other.

According to the above description of the disclosed embodiments, those skilled in the art can implement or practice the present disclosure. Various modifications to these embodiments are obvious to those skilled in the art, the general principles defined herein may be implemented in other embodiments without departing from the spirit and scope of the present disclosure. Therefore, the present disclosure is not limited to the embodiments described herein, but should be in accordance with the broadest scope consistent with the principle and novel features disclosed herein.

## Claims

1. An integrated switchgear, comprising a housing, a three-phase circuit breaker and a three-phase switch assembly, wherein
a quantity of the three-phase switch assembly is at least two, the three-phase switch assembly is electrically connected to the three-phase circuit breaker, and the three-phase circuit breaker and the three-phase switch assembly are both arranged in an inner cavity of the housing;
the three-phase switch assembly comprises moving-side conductors of three phases and static-side conductors of the three phases; and
in an arrangement direction of the moving-side conductors of the three phases, projections of the moving-side conductors of the three phases are overlapped with each other, projections of the static-side conductors of the three phases are overlapped with each other, and projections of conductors of the three-phase circuit breaker are overlapped with each other.

2. The integrated switchgear according to claim 1, wherein the housing comprises a main cylinder (11), a branch cylinder and a casing detachably connected to the branch cylinder, wherein
a side of the casing away from the branch cylinder is covered by a cover plate, the main cylinder (11) is in communication with the branch cylinder, and the three-phase circuit breaker is arranged in the main cylinder (11); and
the three-phase switch assembly is connected to the casing and is arranged in an inner space formed by the branch cylinder and the casing, and the three-phase switch assembly is in a one-to-one correspondence with the casing.

3. The integrated switchgear according to claim 2, wherein a side wall of the main cylinder (11) and a side wall of the branch cylinder each are arc-shaped, and an axis of the main cylinder (11) is perpendicular to an axis of the branch cylinder.

4. The integrated switchgear according to claim 2, wherein
the three-phase switch assembly comprises an isolating switch and a high-speed grounding switch; or
the three-phase switch assembly is an isolating grounding switch, and the isolating grounding switch comprises an isolating switch and a grounding switch.

5. The integrated switchgear according to claim 4, wherein
the isolating switch comprises three static-side conductors (41), (41'); the moving-side conductors of the isolating switch refer to moving-side conductors (42), (42') of the isolating switch in a one-to-one correspondence with the static-side conductors (41), (41') of the isolating switch; the three static-side conductors (41), (41') of the isolating switch are arranged on static-side conductors (23) of a three-phase arc-extinguishing chamber of the three-phase circuit breaker, respectively, moving-side conductors (21) of the three-phase arc-extinguishing chamber are arranged in a straight line; a distance between axes of ends of the two adjacent static-side conductors (41), (41') of the isolating switch connected to the moving-side conductors (42), (42') of the isolating switch is less than a distance between axes of the two adjacent static-side conductors (23) of the three-phase arc-extinguishing chamber; and
the isolating grounding switch comprises three isolating static-side conductors (31); the moving-side conductors of the isolating grounding switch refer to moving-side conductors (32) of the isolating grounding switch in a one-to-one correspondence with the isolating static-side conductors (31) of the isolating grounding switch; the three isolating static-side conductors (31) of the isolating grounding switch are arranged on the moving-side conductors (21) of the three-phase arc-extinguishing chamber of the three-phase circuit breaker, respectively; the moving-side conductors (21) of the three-phase arc-extinguishing chamber are arranged in a straight line; a distance between axes of ends of the two adjacent isolating static-side conductors (31) of the isolating grounding switch connected to the moving-side conductors (32) of the isolating grounding switch is less than a distance between axes of the two adjacent moving-side conductors (21) of the three-phase arc-extinguishing chamber.

6. The integrated switchgear according to claim 5, wherein the moving-side conductors (32) of the isolating grounding switch and the moving-side conductors (42), (42') of the isolating switch are conductors of a same type that are arranged in a mirror-symmetry manner.

7. The integrated switchgear according to claim 5, wherein
free ends of the static-side conductors (41), (41') of the isolating switch extend towards a direction close to the moving-side conductors (21) of the arc-extinguishing chamber; and
the moving-side conductors (42), (42') of the isolating switch are connected to an insulator, and fixed on a metal protrusion (19) or non-metal protrusion (19) inside the branch cylinder by the insulator, and the moving-side conductors (32) of the isolating grounding switch are connected to an insulator and fixed on a metal protrusion (19) or non-metal protrusion (19) inside the branch cylinder by the insulator.

8. The integrated switchgear according to claim 4, further comprising an operating mechanism (73) for the high-speed grounding switch, wherein
the housing comprises the main cylinder (11), the branch cylinder and the casing detachably connected to the branch cylinder, the side of the casing away from the branch cylinder is covered by the cover plate, the main cylinder (11) is in communication with the branch cylinder, and the three-phase circuit breaker is arranged in the main cylinder (11); the three-phase switch assembly is connected to the casing and is arranged in the inner space formed by the branch cylinder and the casing, and the three-phase switch assembly is in a one-to-one correspondence with the casing; and
the high-speed grounding switch, the casing, the cover plate and the operating mechanism (73) for the high-speed grounding switch are integrated to form a detachable module.

9. The integrated switchgear according to claim 4, wherein a quantity of the three-phase switch assembly is two, three or four, and at least one of the three-phase switching assemblies is an isolating grounding switch, wherein
the quantity of the three-phase switch assembly is two, and the two three-phase switch assemblies are arranged on a same side of a plane formed by axes of the three-phase circuit breaker;
the quantity of the three-phase switch assembly is three, two of the three-phase switch assemblies are arranged on a same side of a plane formed by axes of the three-phase circuit breaker, and the other three-phase switch assembly is arranged on another side of the plane formed by the axes of the three-phase circuit breaker; or
the quantity of the three-phase switch assembly is four, two of the three-phase switch assemblies are arranged on a same side of a plane formed by axes of the three-phase circuit breaker, and the other two three-phase switch assemblies are arranged on another side of the plane formed by the axes of the three-phase circuit breaker, wherein static-side conductors of one of the three-phase switch assemblies are shared with the other three-phase switch assembly on the same side.

10. The integrated switchgear according to claim 4, further comprising a wiring sleeve (62), a cable container (64) and a grounding block (171), wherein
grounding static sides (35) of the isolating grounding switch, the wiring sleeve (62) and the cable container (64) are integrated on the cover plate; the cover plate is detachably connected to the casing; a side of the cover plate outside the casing is provided with the grounding block; the grounding static sides (35) are connected to each other by a rigid conductor (172) and are connected to the grounding block (171); the grounding block (171) and the rigid conductor (172) are arranged outside the cable container (64); and the grounding block (171) is connected to the cover plate.
